# EUROPÄISCHE PATENTSCHRIFT

(11) **EP 2 965 925 B1**
(45) Veröffentlichungstag und Bekanntmachung des Hinweises auf die Patenterteilung: **20.02.2019**
(21) Anmeldenummer: 15167920.6
(22) Anmeldetag: 18.05.2015
(51) Int. Cl.: B60C 11/03

(54) **FAHRZEUGLUFTREIFEN**
PNEUMATIC TYRES FOR A VEHICLE
PNEUMATIQUES DE VÉHICULE

(30) Priorität: 09.07.2014 DE 102014213266
(43) Veröffentlichungstag der Anmeldung: 13.01.2016
(73) Patentinhaber: Continental Reifen Deutschland GmbH, 30165 Hannover (DE)
(72) Erfinder: McHenry, Joseph, Chattanooga, TN 37421 (US); Seng, Matthias, 30453 Hannover (DE); Brockmann, Jürgen, 30171 Hannover (DE)
(74) Vertreter: Finger, Karsten

(56) Entgegenhaltungen:
- EP-A1- 1 431 077
- DE-A1- 10 145 061
- DE-A1-102008 037 563

## Beschreibung

### Fahrzeugluftreifen

Die Erfindung betrifft einen Fahrzeugluftreifen in Radialbauart, insbesondere für den Einsatz unter winterlichen Fahrbedingungen, mit einem Laufstreifen, dessen Profilstrukturen gemäß einem Verfahren der Pitchlängenvariation in einer Pitchfolge mit Pitches mit zumindest zwei unterschiedlichen Umfangslängen geräuschoptimiert angeordnet sind, wobei der Laufstreifen in zumindest einem Schulterbereich eine Blockreihe mit durch Querrillen voneinander getrennten Schulterblöcken aufweist, wobei ein oder zwei Schulterblöcke, jeweils mitsamt einer angrenzenden Querrille, zu einem Pitch einer bestimmten Umfangslänge gehört bzw. gehören, wobei in den Schulterblöcken, die in den Pitches mit der größten Umfangslänge verlaufen, eine zusätzliche Querrille verläuft, die den Schulterblock im Verhältnis 1:1 bis 2:3 in zwei Schulterblockteile gliedert, wobei in den Schulterblöcken, die in den Pitches mit der kleinsten Umfangslänge verlaufen, keine zusätzliche Querrille vorgesehen ist.

Es ist bekannt und üblich, in Laufstreifenprofilen die Profilpositive gemäß einem Verfahren der Pitchlängenvariation anzuordnen, um die beim Abrollen des Reifens generierten hörbaren Frequenzen auf ein breites und wenig störendes Frequenzband zu verteilen. Darüber hinaus werden die Laufstreifenprofile von PKW-Winterreifen oft funktional geteilt ausgeführt, das heißt, der mittlere Bereich des Laufstreifens wird hinsichtlich guter Performanceeigenschaften auf Eis, die Schulterblockreihen hinsichtlich guter Performanceeigenschaften auf schneeigem Untergrund optimiert. Durch die Pitchlängenvariation variieren meist auch die Umfangssteifigkeit und die Quersteifigkeit der Profilblöcke über den Reifenumfang, insbesondere in den Schulterblockreihen, was in Abhängigkeit von der generierten Frequenz unterschiedliche Auswirkungen hat. Bei einer Variation niedriger Frequenzen relativ zur Footprintlänge des Reifens können die Bremseigenschaften und, in Folge der Variation der Quersteifigkeit, auch die seitliche Stabilität der Profilblöcke leiden. Als Folge davon kann auch ein erhöhter Abrieb auftreten.

Bei einer Variation höherer Frequenzen relativ zur Footprintlänge können ähnliche nachteilige Effekte auftreten und es kann zusätzlich ein unregelmäßiger Abrieb begünstigt werden.

Ein Fahrzeugluftreifen der eingangs genannten Art ist beispielsweise aus der DE 101 45 061 A1 bekannt. Der Fahrzeugluftreifen weist einen Laufstreifen auf, dessen Profilstrukturen gemäß einer Pitchfolge, welche zumindest zwei unterschiedlich lange Pitches umfasst, angeordnet sind. In den Schulterbereichen des Laufstreifens ist jeweils eine Blockreihe mit durch Querrillen voneinander getrennten Schulterblöcken vorgesehen, wobei jeweils ein Schulterblock mitsamt einer angrenzenden Querrille zu einem Pitch einer bestimmten Umfangslänge gehört. In den Schulterblöcken, die in den Pitches mit der größten Umfangslänge verlaufen, ist eine zusätzliche Querrille ausgebildet, die den Schulterblock in zwei Schulterblockteile gliedert. In den Schulterblöcken, die in den Pitches mit der kleinsten Umfangslänge verlaufen, sind keine zusätzlichen Querrillen vorgesehen.

Aus der EP 1 431 077 A1 ist ein Fahrzeugluftreifen mit einem Laufstreifen bekannt, welcher in seinem Schulterbereich Blockgruppen aufweist, die mit einer bis in den zentralen Laufstreifenbereich hineinverlaufenden Rille zu einem Basispitch gehören. Jede Blockgruppe setzt sich aus zwei oder drei Schulterblöcken zusammen, welche ihrerseits Bestandteile weiterer Pitches unterschiedlicher Pitchlängen sind.

Die DE 10 2008 037 563 A1 offenbart einen Fahrzeugluftreifen mit einem Laufstreifen, welcher in den Schulterbereichen Blockreihen mit durch Querrillen voneinander getrennten Schulterblöcken aufweist. Sämtliche Schulterblöcke sind mit parallel zueinander verlaufenden Einschnitten versehen, wobei jeweils ein Einschnitt mit einer Breite von 0,4 mm bis 0,8 mm und ein Einschnitt mit einer Breite von 1,0 mm bis 4,0 mm abwechselnd angeordnet sind.

Bei dem aus der DE 10 2007 044 435 A1 bekannten Fahrzeugluftreifen sind sämtliche Profilelemente jeweils in sich über den Umfang wiederholenden gleichartigen Pitches unterschiedlicher Umfangslängen angeordnet, wobei in Umfangsrichtung verlaufende Reihen von Profilelementen, insbesondere von Profilblöcken, vorgesehen sind, in welchen sich die Gesamtanzahl der Pitches voneinander unterscheidet. Eine gleichzeitige Verbesserung der Fahreigenschaften auf schneeigem und auf eisigem Untergrund soll dadurch erzielt werden, dass die Gesamtanzahl der Pitches in zumindest einer der schulterseitigen Blockreihen zwischen dem 1,7- und dem 3,2-Fachen größer ist als die Gesamtanzahl der Pitches in zumindest einer im Laufstreifenmittelbereich vorgesehenen Profilelementreihe. Bei dem aus der DE 10 2010 061 086 A1 bekannten Fahrzeugluftreifen weist der Laufstreifen schulterseitige Profilblockreihen und einen zentralen, von Umfangsnuten freien Laufstreifenbereich auf, in welchem Diagonalrillen vorgesehen sind. Je ein Schulterblock aus jeder Schulterblockreihe bildet mit je einer benachbarten Quernut, zwei Diagonalrillen und den zu diesen benachbart verlaufenden Profilpositiven je ein Pitch, wobei die Pitches in zumindest zwei unterschiedlichen Umfangslängen vorgesehen sind. Die schulterseitig angeordneten Profilblöcke sind in ihrem mittleren Bereich jeweils durch eine in konstanter Breite ausgeführte, zusätzliche Querrille zweigeteilt, welche sich parallel zu den zwischen den Profilblöcken verlaufenden Querrillen erstrecken. Um das Laufstreifenprofil besonders geräuscharm und mit gutem Wasserdrainagevermögen auszuführen, verläuft in jedem Pitch eine der Diagonalrillen entlang der einen Pitchgrenze und die andere Diagonalrille entlang der anderen Pitchgrenze.

Der Erfindung liegt die Aufgabe zugrunde, einen Fahrzeugluftreifen der eingangs genannten Art derart zu verbessern, dass in den Schulterblockreihen über den Reifenumfang eine weitgehend gleichmäßige Umfangssteifigkeit und Quersteifigkeit vorliegt. Dabei soll das durch die Pitchlängenvariation gegebene günstige Abrollgeräusch beibehalten werden können.

Gelöst wird die gestellte Aufgabe erfindungsgemäß dadurch, dass die zusätzliche Querrille eine Breite von 1,0 mm bis 3,0 mm aufweist und dass die Schulterblöcke mit zumindest im Wesentlichen parallel zueinander und parallel zu den Querrillen verlaufenden Einschnitten mit einer Breite von 0,4 mm bis 0,6 mm versehen sind, die den jeweiligen Schulterblock durchqueren und zu den die Querrillen begrenzenden Blockkanten sowie zur zusätzlichen Querrille im Wesentlichen gleich große Abstände aufweisen,
wobei bei einer Ausführung, bei der die zusätzliche Querrille den Schulterblock im Verhältnis 1:1 in zwei Schulterblockteile gliedert, je ein Einschnitt in jedem Schulterblockteil verläuft
und wobei bei einer Ausführung, bei der die zusätzliche Querrille den Schulterblock im Verhältnis 2:3 in zwei Schulterblockteile gliedert, im größeren Schulterblockteil zwei Einschnitte verlaufen und im kleineren Schulterblockteil ein Einschnitt verläuft.

Durch die erfindungsgemäße Zweiteilung der Schulterblöcke in Pitches mit größerer Umfangslänge werden die Umfangssteifigkeit und die Quersteifigkeit der Schulterblöcke über den Laufstreifenumfang vergleichmäßigt. Diese Vergleichmäßigung hat positive Auswirkungen auf die Bremseigenschaften, auf den Laufstreifenabrieb insgesamt und auch auf die Gleichmäßigkeit des Laufstreifenabriebes.

Bei einer bevorzugten Ausführungsvariante beträgt die Tiefe der zusätzlichen Querrillen 50 % und 100 % der Tiefe der zwischen den Schulterblöcken verlaufenden Querrillen. Die Tiefe und die Breite dieser zusätzlichen Querrillen werden daher an die Größe der Schulterblöcke, insbesondere ihre Umfangslänge, angepasst, um die Umfangs- und die Quersteifigkeit im erwünschten Ausmaß zu beeinflussen.

In diesem Zusammenhang ist es auch vorteilhaft, wenn eine zusätzliche Querrille in den Schulterblöcken jener Pitches angeordnet wird, deren Pitchlänge mindestens das 1,2-Fache der Pitchlänge des kürzesten Pitches beträgt.

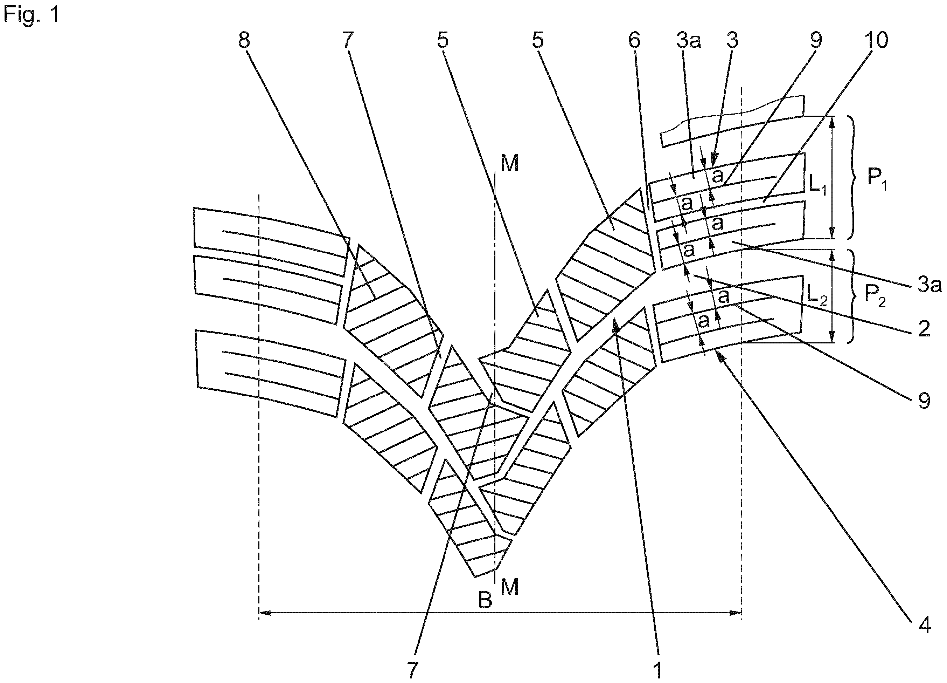

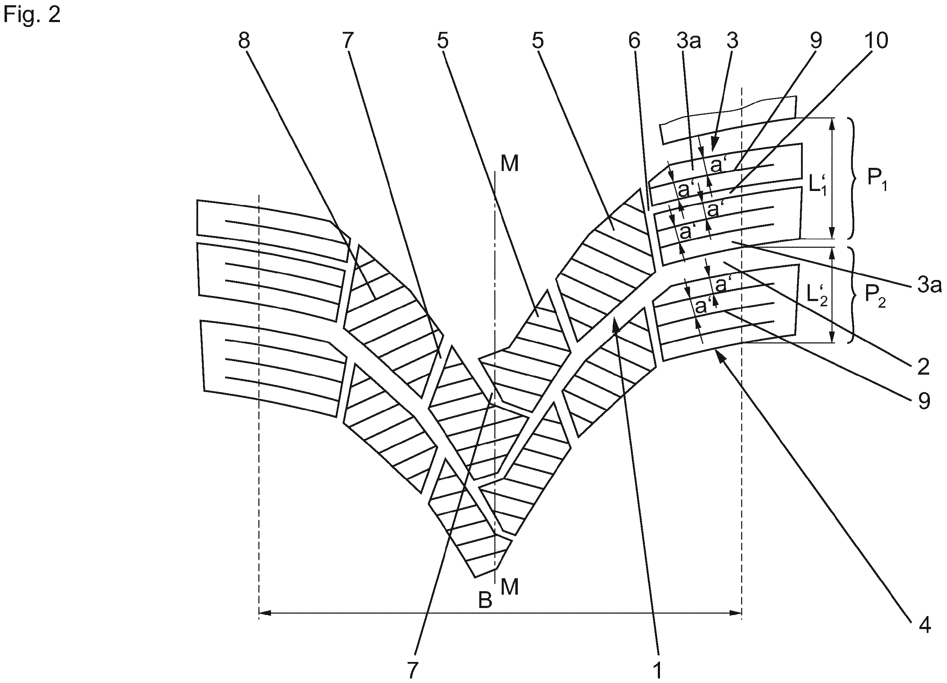

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 und Fig. 2 jeweils eine Draufsicht auf die Profilelemente in zwei Pitches eines Laufstreifens eines Fahrzeugluftreifens, jeweils mit einer Ausführungsvariante der Erfindung.

Die in den Figuren dargestellten Profilelemente gehören zu einem Laufstreifen, der jeweils für einen Fahrzeugluftreifen für Personenkraftwagen vorgesehen und für einen Einsatz unter winterlichen Fahrbedingungen besonders geeignet ist. Mit M-M ist jeweils der Reifenäquator, mit B die Breite des bodenberührenden Teils des Laufstreifens (unter Nenndruck und Nennlast gemäß E.T.R.T.O.-Standards) bezeichnet. Die in den Figuren dargestellten Profilelemente gehören beispielhaft zu laufrichtungsgebunden ausgeführten Laufstreifenprofilen, wobei die in der einen Laufstreifenhälfte vorgesehenen Profilelemente gegenüber jenen, die in der anderen Laufstreifenhälfte vorgesehen sind, in Umfangsrichtung geringfügig versetzt sind.

Fig. 1 und Fig. 2 zeigen Ausführungsformen von Profilelementen mit über die Laufstreifenbreite V-förmig verlaufenden Rillen 1. Schulterseitig bilden die Rillen 1 Querrillen 2 zwischen Schulterblöcken 3 von Schulterblockreihen 4. Die Querrillen 2 verlaufen im Wesentlichen geradlinig oder leicht bogenförmig und im Wesentlichen in Querrichtung, daher höchstens unter einem kleinen spitzen Winkel von bis zu 30° zur Querrichtung. Zwischen den beiden Schulterblockreihen 4 weist der Laufstreifen eine Blockstruktur mit einer Vielzahl von Blöcken 5 auf, wobei einige Blöcke 5 durch Umfangsrillen 6 jeweils von einem Schulterblock 3 getrennt sind und im Bereich der Laufstreifenmitte weitere Rillen 7 zwischen weiteren Blöcken 5 verlaufen. Die Blockstruktur aus Blöcken 5 ist nicht Gegenstand der Erfindung, sodass auf sie nicht näher eingegangen wird. Die Umfangsrillen 6 verlaufen bei der gezeigten Ausführungsform unter einem kleinen spitzen Winkel von bis zu 20° zur Umfangsrichtung, sie können sich jedoch auch in Umfangsrichtung erstrecken. Die Blöcke 5 und die Schulterblöcke 3 sind jeweils mit in jedem Profilblock 5 zumindest im Wesentlichen parallel zueinander verlaufenden Einschnitten 8 bzw. 9 versehen, die den jeweiligen Profilblock 5 durchqueren und insbesondere eine Breite von 0,4 mm bis 0,6 mm aufweisen. In den Blöcken 5 erstrecken sich die Einschnitte 8 unter einem spitzen Winkel von bis zu 35° zur Querrichtung. Die Anordnung und die Ausführung der Einschnitte 8, die in Draufsicht auch wellen- oder zickzackförmig verlaufen können, ist nicht Gegenstand der Erfindung.

Zur Erzielung eines unauffälligen und möglichst geringen Abrollgeräusches sind Laufstreifenprofile im Allgemeinen geräuschoptimiert gestaltet. Dazu werden Laufstreifenprofile in sogenannte Pitches gegliedert, wobei bei den in Fig. 1 und Fig. 2 dargestellten Ausführungsvarianten jeweils eine Pitchfolge mit zwei Pitches P₁ und P₂ mit unterschiedlichen Umfangslängen L₁ und L₂ (Fig. 1) bzw. L₁' und L₂' (Fig. 2) vorgesehen ist, die an den Laufstreifenrändern vorliegen. Das Pitch P₁ weist die geringere Umfangslänge L₁, L₁' auf, das Pitch P₂ die größere Umfangslänge L₂, L₂', wobei das Verhältnis der beiden Umfangslängen L₁ : L₂ bzw. L₁' : L₂' im üblichen Bereich gewählt wird, beispielsweise 1 : 1,35 beträgt.

Die Pitches P₁ und P₂ werden, wie an sich bekannt, über den Reifenumfangs gemäß einer sogenannten Pitchfolge angeordnet, wobei die Gesamtanzahl der Pitches über den Reifenumfang in einem PKW-Winterreifen in der Größenordnung von 50 bis 90 beträgt. In einer Pitchfolge können an manchen Stellen des Reifenumfanges auch zwei oder mehr Pitches gleicher Länge hintereinander angeordnet sein.

Zu jedem Pitch P₁, P₂ gehört jeweils ein Schulterblock 3 und eine Querrille 2, zur Laufstreifenmitte zu in analoger Weise Rillen 1 und Blöcke 5. Von Bedeutung für die Erfindung sind jedoch die Schulterblöcke 3 in den Pitches P₁ und P₂. Innerhalb jedes Pitches P₁, P₂ sind die Schulterblöcke 3 gleich ausgeführt, wobei sich jedoch der Schulterblock 3, der in einem Pitch P₁ angeordnet ist, von jenen, der in einem Pitch P₂ angeordnet ist, unterscheidet. Bei der in Fig. 1 gezeigten Ausführungsform weist der Schulterblock 3 in einem Pitch P₁ zwei parallel zu den Querrillen 2 verlaufende Einschnitte 9 auf, deren gegenseitiger Abstand a (Normalabstand) und deren Abstand a (Normalabstand) zu den benachbarten, Querrillen 2 begrenzenden Blockkanten im Wesentlichen gleich groß ist. Der Schulterblock 3 in den Pitches P₂ ist jeweils durch eine im Wesentlichen im mittleren Bereich des Schulterblockes 3 parallel zu den Querrillen 2 verlaufende zusätzliche Querrille 10 in Schulterblockteile 3a geteilt. Die zusätzliche Querrille 10 weist eine geringere Breite als die Querrillen 2 auf, insbesondere beträgt ihre Breite 1,0 mm bis 3,0 mm. Ihre Tiefe kann geringer sein als die Tiefe der Querrillen 2 und beträgt zwischen 50 % und 100 % der Tiefe der Querrillen 2 an deren laufstreifeninnenseitigen Endbereichen, bei den Umfangsrillen 6. Die Schulterblockteile 3a weisen jeweils in ihrem mittleren Bereich einen Einschnitt 9 auf, welcher parallel zur Querrille 2 und zur zusätzlichen Querrille 10 und zu den Querrillen 2, 10 unter einem zumindest im Wesentlichen gleich großen Abstand, welcher im Wesentlichen dem oben erwähnten Abstand a entspricht, verläuft. Durch die zusätzlichen Querrillen 10 in den Schulterblöcken 3 in den Pitches P₂ mit der größeren Umfangslänge L₂ wird die Umfangs- und die Quersteifigkeit der Schulterblockreihen 4 vergleichmäßigt, wodurch ein gleichmäßigerer und auch geringerer Abrieb des Laufstreifens in den Schulterbereichen unterstützt wird und vor allem die Bremseigenschaften des Reifens verbessert werden.

Fig. 2 zeigt eine weitere Ausführungsform der Erfindung, bei der in den Schulterblöcken 3, welche zu einem Pitch P₁ mit der geringeren Umfangslänge L₁' gehören, jeweils drei parallel zu den Querrillen 2 verlaufende Einschnitte 9 angeordnet sind, welche zueinander und zu den die Querrillen 2 begrenzenden Blockkanten im Wesentlichen gleich große Abstände a' (Normalabstand) aufweisen. In den Schulterblöcken 3, die zu einem Pitch P₂ mit der größeren Umfangslänge L₂' gehören, teilt eine zusätzliche Querrille 10, die anstelle eines Einschnittes vorgesehen ist und parallel zu den Querrillen 2 verläuft, die Schulterblöcke 3 im Wesentlichen im Verhältnis 2 : 3 in Schulterblockteile 3a. Dabei sind in diesem Schulterblock 3 drei Einschnitte 9 vorhanden, einer zwischen der zusätzlichen Querrille 10 und der einen Querrille 2, zwei weitere zwischen der zusätzlichen Querrille 10 und der zweiten, den Schulterblock 3 begrenzenden Querrille 2, die betreffenden Abstände a' sind im Wesentlichen gleich groß. Tiefe und Breite der zusätzlichen Querrille 10 entsprechen jener gemäß dem ersten Ausführungsbeispiel.

Die Erfindung ist auch auf Laufstreifenprofile anwendbar, bei welchen die Profilelemente, insbesondere die schulterseitig angeordneten Profilblöcke, in drei oder mehr als drei Pitches unterschiedlicher Längen angeordnet werden. Dabei ist in den Schulterblöcken in den Pitches mit der kleinsten Umfangslänge keine zusätzliche Querrille vorgesehen, zumindest im längsten Pitch wird im Schulterblock bzw. in den Schulterblöcken entweder mittig und gegenüber der Mitte etwas versetzt jeweils eine zusätzliche Querrille angeordnet. Vorzugsweise wird die zusätzliche Querrille in Schulterblöcken vorgesehen, die zu Pitches Pₙ gehören, deren Pitchlänge mindestens das 1,2-Fache der Pitchlänge des kürzesten Pitches beträgt. Zu einem Pitch einer bestimmten Umfangslänge können auch zwei insbesondere gleich ausgeführte Schulterblöcke gehören, die gemäß der Erfindung mit jeweils einer zusätzlichen Querrille versehen sein können.

### Bezugsziffernliste

- 1: Rille
- 2: Querrille
- 3: Schulterblock
- 3a: Schulterblockteil
- 4: Schulterblockreihe
- 5: Block
- 6: Umfangsrille
- 7: Rille
- 8: Einschnitt
- 9: Einschnitt
- 10,: Querrille
- a, a': Abstand
- B: Breite
- L₁, L₁', L₂, L₂': Umfangslänge
- M-M: Mittellinie
- P₁, P₂: Pitch

## Patentansprüche

1. Fahrzeugluftreifen in Radialbauart, insbesondere für den Einsatz unter winterlichen Fahrbedingungen, mit einem Laufstreifen, dessen Profilstrukturen gemäß einem Verfahren der Pitchlängenvariation in einer Pitchfolge mit Pitches (P₁, P₂) mit zumindest zwei unterschiedlichen Umfangslängen (L₁, L₂, L₁', L₂') geräuschoptimiert angeordnet sind, wobei der Laufstreifen in zumindest einem Schulterbereich eine Blockreihe (4) mit durch Querrillen (2) voneinander getrennten Schulterblöcken (3) aufweist, wobei ein oder zwei Schulterblöcke (3), jeweils mitsamt einer angrenzenden Querrille (2), zu einem Pitch (P₁, P₂) einer bestimmten Umfangslänge (L₁, L₁', L₂, L₂') gehört bzw. gehören, wobei in den Schulterblöcken (3), die in den Pitches (P₂) mit der größten Umfangslänge (L₂, L₂') verlaufen, eine zusätzliche Querrille (10) verläuft, die den Schulterblock (3) im Verhältnis 1:1 bis 2:3 in zwei Schulterblockteile (3a) gliedert, wobei in den Schulterblöcken (3), die in den Pitches (P₁) mit der kleinsten Umfangslänge (L₂, L₂') verlaufen, keine zusätzliche Querrille (10) vorgesehen ist,
**dadurch gekennzeichnet,**
**dass** die zusätzliche Querrille (10) eine Breite von 1,0 mm bis 3,0 mm aufweist und dass die Schulterblöcke (3) mit zumindest im Wesentlichen parallel zueinander und parallel zu den Querrillen (2) verlaufenden Einschnitten (9) mit einer Breite von 0,4 mm bis 0,6 mm versehen sind, die den jeweiligen Schulterblock (3) durchqueren und zu den die Querrillen (2) begrenzenden Blockkanten sowie zur zusätzlichen Querrille (10) im Wesentlichen gleich große Abstände (a, a') aufweisen,
wobei bei einer Ausführung, bei der die zusätzliche Querrille (10) den Schulterblock (3) im Verhältnis 1:1 in zwei Schulterblockteile (3a) gliedert, je ein Einschnitt (9) in jedem Schulterblockteil (3a) verläuft und wobei bei einer Ausführung, bei der die zusätzliche Querrille (10) den Schulterblock (3) im Verhältnis 2:3 in zwei Schulterblockteile (3a) gliedert, im größeren Schulterblockteil (3a) zwei Einschnitte (9) verlaufen und im kleineren Schulterblockteil (3a) ein Einschnitt (9) verläuft.

2. Fahrzeugluftreifen nach Anspruch 1, **dadurch gekennzeichnet, dass** die zusätzlichen Querrillen (10) eine Tiefe von 50 % bis 100 % der Tiefe der zwischen den Schulterblöcken (3) verlaufenden Querrillen (2) aufweisen.

3. Fahrzeugluftreifen nach Anspruch 1 oder 2, **dadurch gekennzeichnet, dass** eine zusätzliche Querrille (10) in den Schulterblöcken (3) jener Pitches (P₁, P₂) angeordnet ist, deren Pitchlängen mindestens das 1,2-Fache der Pitchlänge des kürzesten Pitches beträgt.

## Claims

1. Pneumatic vehicle tyre of radial type of construction, in particular for use in winter driving conditions, having a tread, the profile structures of which are, in accordance with the method of pitch length variation, arranged in noise-optimized fashion in a pitch sequence with pitches (P₁, P₂) with at least two different circumferential lengths (L₁, L₂, L₁', L₂'), wherein the tread has, in at least one shoulder region, a block row (4) with shoulder blocks (3) separated from one another by transverse channels (2), wherein one or two shoulder blocks (3), in each case together with an adjacent transverse channel (2), belong to a pitch (P₁, P₂) of a particular circumferential length (L₁, L₁', L₂, L₂'), wherein, in those shoulder blocks (3) which run in the pitches (P₂) with the greatest circumferential length (L₂, L₂'), there runs an additional transverse channel (10) which divides the shoulder block (3) in the ratio 1:1 to 2:3 into two shoulder block parts (3a), wherein no additional transverse channel (10) is provided in those shoulder blocks (3) which run in the pitches (P₁) with the smallest circumferential length (L₂, L₂'),
**characterized**
**in that** the additional transverse channel (10) has a width of 1.0 mm to 3.0 mm, and in that the shoulder blocks (3) are equipped with sipes (9) which run at least substantially parallel to one another and parallel to the transverse channels (2) and which have a width of 0.4 mm to 0.6 mm and which extend through the respective shoulder block (3) and which have substantially equal spacings (a, a') to the block edges delimiting the transverse channel (2) and to the additional transverse channel (10), wherein, in an embodiment in which the additional transverse channel (10) divides the shoulder block (3) in the ratio 1:1 into two shoulder block parts (3a), in each case one sipe (9) runs in each shoulder block part (3a), and wherein, in an embodiment in which the additional transverse channel (10) divides the shoulder block (3) in the ratio 2:3 into two shoulder block parts (3a), two sipes (9) run in the relatively large shoulder block part (3a) and one sipe (9) runs in the relatively small shoulder block part (3a).

2. Pneumatic vehicle tyre according to Claim 1, **characterized in that** the additional transverse channels (10) have a depth of 50% to 100% of the depth of the transverse channels (2) running between the shoulder blocks (3).

3. Pneumatic vehicle tyre according to Claim 1 or 2, **characterized in that** an additional transverse channel (10) is arranged in the shoulder blocks (3) of those pitches (P₁, P₂) whose pitch length amounts to at least 1.2 times the pitch length of the shortest pitch.

## Revendications

1. Bandage pneumatique pour roue de véhicule à structure radiale, en particulier destiné à être utilisé dans des conditions hivernales de conduite, et présentant une bande de roulement dont les structures profilées ont été optimisées en termes de bruit en appliquant un procédé de variation de la longueur du pas dans une succession de pas (P₁, P₂) présentant au moins deux longueurs périphériques (L₁, L₂, L₁', L₂') différentes,
la bande de roulement présentant dans au moins une zone d'épaulement une rangée (4) de blocs d'épaulement (3) séparés les uns des autres par des rainures transversales (2), un ou deux blocs d'épaulement (3), chacun en même temps qu'une rainure transversale (2) adjacente, appartenant à un pas (P₁, P₂) d'une longueur périphérique (L₁, L₂, L₁', L₂') définie,
une rainure transversale supplémentaire (10) qui divise le blocs d'épaulement (3) en deux parties (3a) de blocs d'épaulement selon un rapport 1:1 à 2:3 s'étendant dans les blocs d'épaulement (3) qui s'étendent dans les pas (P₂) présentant la plus grande longueur périphérique (L₂, L₂'), aucune rainure transversale supplémentaire (10) n'étant prévue dans les blocs d'épaulement (3) qui s'étendent dans les pas (P₁) présentant la plus petite longueur périphérique (L₂, L₂'),
**caractérisé en ce que**
la rainure transversale supplémentaire (10) présente une largeur de 1,0 mm à 3,0 mm et
**en ce que** les blocs d'épaulement (3) sont dotés d'entailles (9) d'une largeur de 0,4 mm à 0,6 mm qui s'étendent essentiellement en parallèle les unes aux autres et parallèlement au rainures transversales (2), traversent le bloc d'épaulement (3) concerné et présentent par rapport aux bords de blocs délimitant les rainures transversales (2) ainsi que par rapport à la rainure transversale supplémentaire (10) des distances (a, a') essentiellement identiques,
**en ce que** dans un mode de réalisation dans lequel la rainure transversale supplémentaire (10) divise le blocs d'épaulement (3) en deux parties (3a) de bloc d'épaulement dans un rapport 1:1, une entaille (9) s'étend dans chaque partie (3a) de bloc d'épaulement et
**en ce que** dans un mode de réalisation dans lequel la rainure transversale supplémentaire (10) divise le bloc d'épaulement (3) en deux parties (3a) de bloc d'épaulement dans un rapport 2:3, deux entailles (9) s'étendent dans la grande partie (3a) de bloc d'épaulement et une entaille (9) s'étend dans la petite partie (3a) de bloc d'épaulement.

2. Bandage pneumatique pour roue de véhicule selon la revendication 1, **caractérisé en ce que** la profondeur des rainures transversales supplémentaires (10) représente de 50 % à 100 % de la profondeur des rainures transversales (2) qui s'étendent entre les blocs d'épaulement (3).

3. Bandage pneumatique pour roue de véhicule selon les revendications 1 ou 2, **caractérisé en ce qu'**une rainure transversale supplémentaire (10) est disposée dans les blocs d'épaulement (3) de chaque pas (P₁, P₂) dont la longueur représente au moins 1,2 fois la longueur du pas le plus court.
